Europäisches Patentamt

European Patent Office

Office européen des brevets

(19)

(11) **EP 1 367 367 A1**

(12) **EUROPEAN PATENT APPLICATION**
published in accordance with Art. 158(3) EPC

(43) Date of publication:
**03.12.2003 Bulletin 2003/49**

(51) Int Cl.⁷: **G01C 19/56**, G01P 9/04

(21) Application number: **02702793.7**

(86) International application number:
**PCT/JP02/02116**

(22) Date of filing: **07.03.2002**

(87) International publication number:
**WO 02/073131 (19.09.2002 Gazette 2002/38)**

(84) Designated Contracting States:
**AT BE CH CY DE DK ES FI FR GB GR IE IT LI LU MC NL PT SE TR**

(30) Priority: **09.03.2001 JP 2001066341**

(71) Applicant: **MATSUSHITA ELECTRIC INDUSTRIAL CO., LTD.**
**Kadoma-shi, Osaka 571-8501 (JP)**

(72) Inventors:
• **NOZOE, Toshiyuki**
  **Kyoto-shi, Kyoto 605-0953 (JP)**
• **KURODA, Keisuke**
  **Katano-shi, Osaka 576-0021 (JP)**

(74) Representative: **Grünecker, August, Dipl.-Ing.**
**Patentanwälte**
**Grünecker, Kinkeldey, Stockmair & Partner**
**Maximilianstrasse 58**
**80538 München (DE)**

(54) **ANGULAR VELOCITY SENSOR**

(57)     The present invention provides an angular velocity sensor that allows abnormality detection of the sensor from the outside and has further improved in-service reliability. The angular velocity sensor includes a pair of current amplifiers for receiving an output from a sense electrode, a differential amplifier for amplifying output difference between the pair of current amplifiers, a ninety-degree phase shifter constituting a synchronous demodulator for outputting an angular velocity signal by detecting an output from the differential amplifier synchronously with a monitor signal, and a synchronous detector. The monitor signal is added to an input terminal of the current amplifier via a capacitor used as an injector based on an external diagnosis request signal supplied from a control terminal.

FIG. 1

## Description

## TECHNICAL FIELD

The present invention relates to an angular velocity sensor, especially to an angular velocity sensor having a self-diagnostic function.

## BACKGROUND ART

A tuning-fork-type angular velocity sensor, for example, has detecting plates at the tips of both driving plates of a tuning-fork-shaped driving section, orthogonally to the driving plates. When an angular velocity is applied to the driving plates while the driving plates are always driven like a tuning fork, the detecting plates oscillate mutually in the opposite directions in response to the angular velocity, and output a signal indicating the angular velocity.

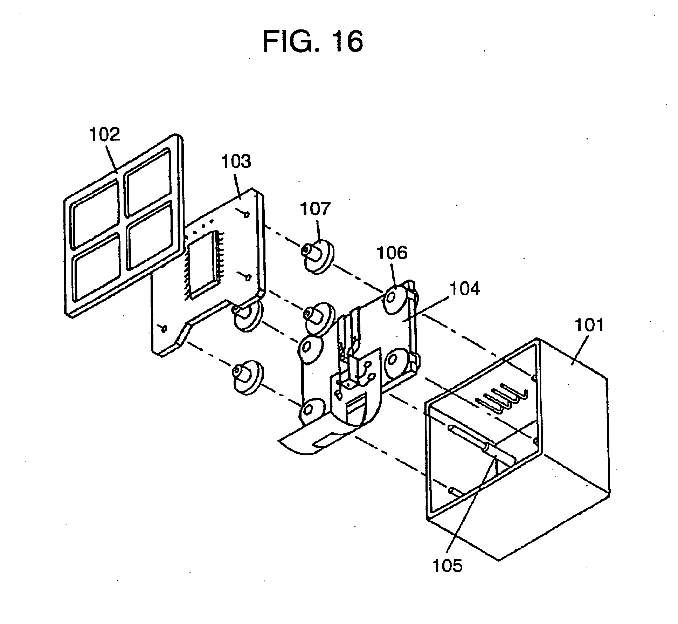

A conventional angular velocity sensor has a sealed space as shown in Fig. 16. The sealed space is formed by mounting resin-made lid 102 to the opening of resin-made case 101 of which one end opens.

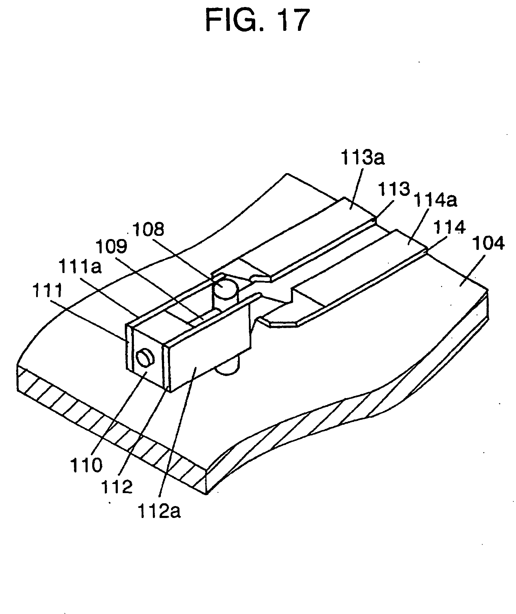

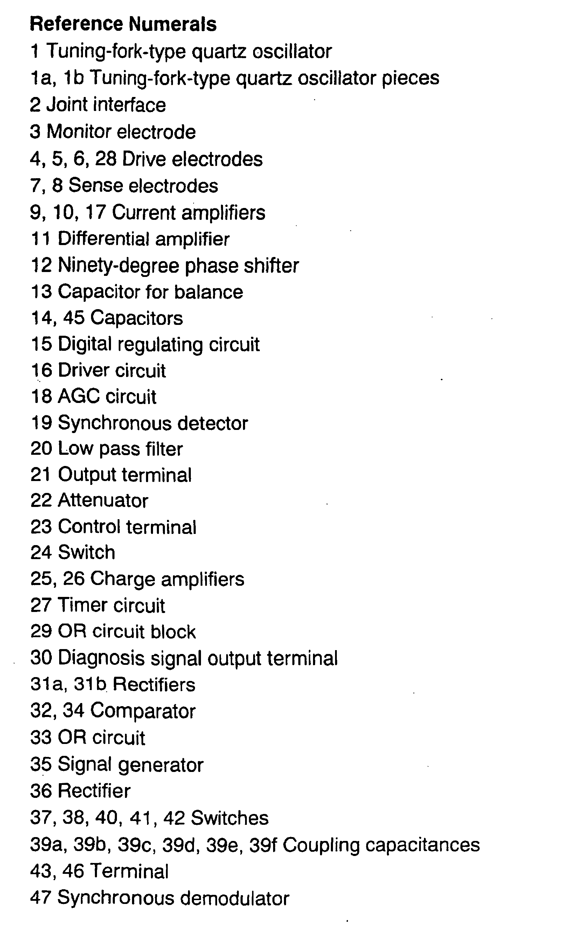

Circuit board 103 and metallic weight plate 104 are stored in the sealed space. Support pins 105 are implanted into four corners of the inside of case 101, and elastically support and fix weight plate 104 and circuit board 103. Rubber-made dampers 106 used for the elastic support are mounted to the four corners on weight plate 104, and resin-made support leg 107 is disposed between each damper 106 and circuit board 103. Each support pin 105 penetrate each damper 106, each support leg 107, and circuit board 103 from the downside, and then the tip of the support pin is crushed to the circuit board 103 side, thereby elastically supporting and fixing circuit board 103 and weight plate 104. As shown in Fig. 17, metallic support pin 108 is vertically pressed into and fixed to weight plate 104 on the circuit board 103 side, and one end of metallic support pin 109 is horizontally pressed into and fixed to an upper part of support pin 108. Support pin 109 has a small diameter, namely about one-fifth that of support pin 108, and is made of metallic material having a spring property similarly to a piano wire or the like. Metallic substrate 110 is fixed to the other end of support pin 109 by solder.

Respective sides of substrate 110 sandwiching support pins 108, 109 are fixed to respective ends of metallic driving plates 111, 112, plate-like piezoelectric elements 111a, 112a are fixed to respective surfaces of driving plates 111, 112, thereby forming a tuning-fork-shaped driving section. As shown in Fig. 17, the other ends of driving plates 111, 112 are folded orthogonally to piezoelectric elements 111a, 112a, plate-like piezoelectric elements 113a, 114a are then fixed to elongated detecting plates 113, 114, thereby forming a detecting section. The driving section and the detecting section constitute a sensor element.

The conventional angular velocity sensor has a following problem. In other words, even when a failure occurs in a component after a start of the sensor, the sensor has no function for informing the outside of the failure or has no information allowing the outside to recognize the failure.

The present invention aims to allow the outside to detect a state where the sensor cannot perform a normal detection because of the damage of a part of the sensor, and allow the use of an angular velocity sensor having high reliability.

## DISCLOSURE OF THE INVENTION

An angular velocity sensor of the present invention has the following configuration.

The angular velocity sensor includes the following elements:

a sensor element having an oscillating section and a detecting section for detecting an angular velocity;
a driving means having a driver circuit for supplying a driving signal to the oscillating section of the sensor element, and a monitor circuit for receiving a monitor signal from the sensor element;
a detecting means having the following components:

one pair of a pair of charge amplifiers and a pair of current amplifiers for receiving an output from the detecting section of the sensor element;
a differential amplifier for amplifying output difference between one pair of the pair of charge amplifiers and the pair of current amplifiers; and
a synchronous demodulator for outputting an angular velocity signal by detecting an output from the differential amplifier synchronously with the driving signal from the driving means; and

a self-diagnosis means for outputting a diagnosis signal used for detecting an abnormality by adding a signal synchronous with the driving signal of the driving means to a stage before the synchronous demodulator.

This configuration allows the detection from the outside of a state in which a part of the sensor damages to disable a normal detection, and provides an angular velocity sensor having further improved in-service reliability.

## BRIEF DESCRIPTION OF THE DRAWINGS

Fig. 1 is a block diagram of a circuit in accordance with a first exemplary embodiment of the present invention.

Fig. 2 is an arrow diagram in the cross section taken along the line W - W of Fig. 1 of a tuning-fork-type quartz oscillator in accordance with the first exemplary embodiment.

Fig. 3 shows internal current in the tuning-fork-type quartz oscillator in accordance with the first exemplary embodiment during exerting Coriolis force.

Fig. 4 shows operating waveform charts of elements in an angular velocity sensor in accordance with the first exemplary embodiment.

Fig. 5 is a block diagram of a circuit in accordance with a second exemplary embodiment of the present invention.

Fig. 6 shows operating waveform charts of elements in an angular velocity sensor in accordance with the second exemplary embodiment.

Fig. 7 is a block diagram of a circuit in accordance with a third exemplary embodiment of the present invention.

Fig. 8 shows operating waveform charts of elements in an angular velocity sensor in accordance with the third exemplary embodiment.

Fig. 9 is a block diagram of a circuit in accordance with a fourth exemplary embodiment of the present invention.

Fig. 10 shows internal current occurring in electrodes in a tuning-fork-type quartz oscillator in accordance with the fourth exemplary embodiment.

Fig. 11 shows operating waveform charts of elements in an angular velocity sensor in accordance with the fourth exemplary embodiment.

Fig. 12 is a block diagram of a circuit in accordance with a fifth exemplary embodiment of the present invention.

Fig. 13 shows coupling capacitance between electrodes in the cross section taken along the line W - W of Fig. 12 of a tuning-fork-type quartz oscillator in accordance with the fifth exemplary embodiment.

Fig. 14 (a) shows operating waveform charts of elements before regulation in an angular velocity sensor in accordance with the fifth exemplary embodiment.

Fig. 14 (b) shows operating waveform charts of elements during regulation in the angular velocity sensor in accordance with the fifth exemplary embodiment.

Fig. 14 (c) shows operating waveform charts of elements after regulation in the angular velocity sensor in accordance with the fifth exemplary embodiment.

Fig. 15 is a block diagram of a circuit in accordance with a sixth exemplary embodiment of the present invention.

Fig. 16 is an exploded perspective view of an essential part of a conventional angular velocity sensor.

Fig. 17 is an enlarged perspective view of an essential part of a conventional angular velocity sensor.

## DETAILED DESCRIPTION OF PREFERRED EMBODIMENTS

An exemplary embodiment of the present invention will be described hereinafter with reference to the drawings.

(Exemplary Embodiment 1)

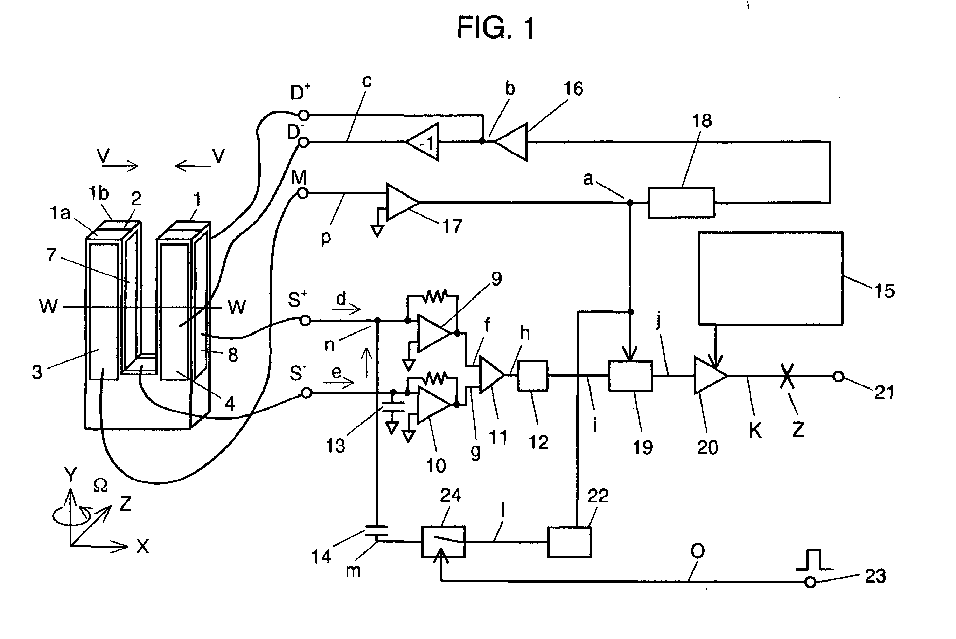

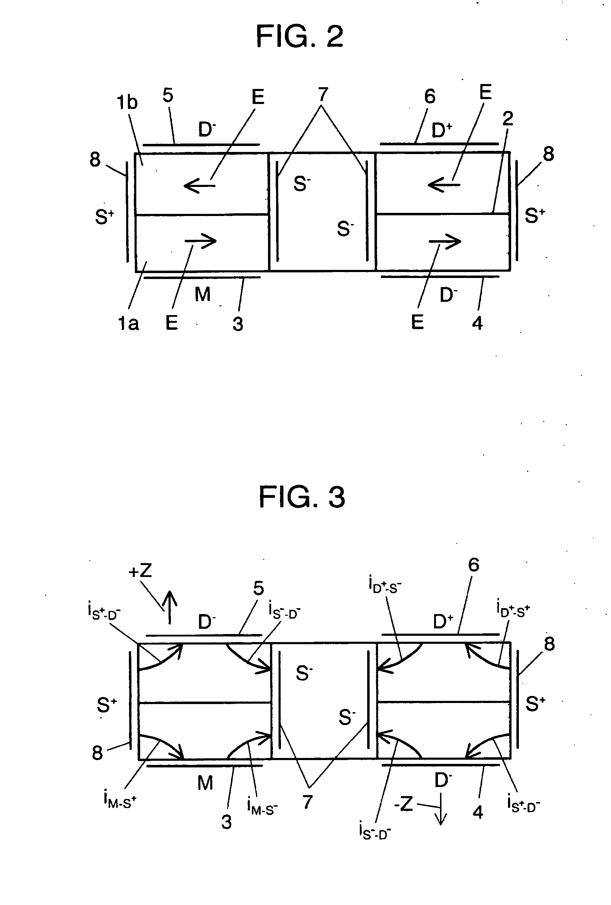

Fig. 1 is a block diagram of a circuit in an angular velocity sensor in accordance with a first exemplary embodiment of the present invention. Fig. 2 is an arrow diagram in the cross section taken along the line W - W of Fig. 1 of tuning-fork-type quartz oscillator 1 in accordance with the first exemplary embodiment. Fig. 3 shows a current distribution of tuning-fork-type quartz oscillator 1 in the cross section taken along the line W - W.

In Fig. 1, Fig. 2, and Fig. 3, tuning-fork-type quartz oscillator 1 has a bimorph structure. In the bimorph structure, tuning-fork quartz oscillator pieces 1a, 1b are directly joined together on joint interface 2 so that electrical axes (E) of oscillator pieces 1a, 1b direct mutually oppositely in the width (X-axis) direction of oscillator pieces 1a, 1b. Monitor electrode 3, drive electrodes 4, 5, 6, and sense electrodes 7, 8 that are made of gold or the like are formed on surfaces of oscillator pieces 1a, 1b thereby constituting tuning-fork-type quartz oscillator 1. Fig. 2 and Fig. 3 show the case in which drive electrode 6 is a positive electrode ($D^+$), drive electrodes 4, 5 are negative electrodes ($D^-$), sense electrode 7 is a negative electrode ($S^-$), and sense electrode 8 is a positive electrode ($S^+$). Monitor electrode 3 is shown by M. Current amplifiers 9, 10 having 0° or 180° of phase characteristic of input current - output voltage amplify signals from sense electrodes 7, 8. Differential amplifier 11 outputs a difference between outputs from current amplifiers 9, 10. Ninety-degree phase shifter 12 shifts by 90° the phase of the signal from differential amplifier 11. Capacitor 13 for balance has a capacity characteristic substantially the same as that of capacitor 14 used as an injector and is interposed between an input terminal of current amplifier 10 and a reference voltage of the circuit so as to have a balance with capacitor 14. Therefore, even when fluctuation of supply voltage of the sensor varies the reference voltage of the circuit and hence charge/discharge current by capacitor 14 is fed into current amplifier 9, this charge/discharge current balances with charge/discharge current by capacitor 13 and is hence cancelled by differential amplifier 11. The sensor can therefore obtain high durability against supply voltage fluctuation. The sensor has digital regulating circuit 15 for regulating a sensor output.

A fundamental operation of the angular velocity sensor shown in Fig. 1 will be roughly described. In Fig. 1, tuning-fork-type quartz oscillator 1 is driven by driver circuit 16 to start oscillation, monitor electrode 3 generates a monitor signal proportional to the level of the oscillation, and the monitor signal is fed back to driver circuit 16 via current amplifier 17 as a monitor circuit and AGC circuit 18. Tuning-fork-type quartz oscillator 1 is stably driven by the driving means constituting a closed loop.

Tuning-fork-type quartz oscillator 1 oscillates like a tuning fork at velocity V in the X-axis direction as shown in Fig. 1. When angular velocity $\Omega$ about the Y-axis is applied, Coriolis force Fc = m $\times$ V $\times$ $\Omega$ (where, m is mass of each arm) occurs in the Z-axis direction in an arm of each of tuning-fork quartz oscillator pieces 1a, 1b. Fig. 3 shows an internal current state of the arms of quartz oscillator 1 in the cross section taken along the line W - W when Coriolis force Fc is exerted on each arm as discussed above. The arms of quartz oscillator 1 bend mutually oppositely in the Z-axis direction, so that currents having substantially equal strength and reverse polarity occur in sense electrodes 7, 8 via monitor electrode 3 and drive electrodes 4, 5, 6, as shown in Fig. 3. Current $i_{s-}$ on the sense electrode 7 side is expressed by

$$i_s^- = -(i_{S-D}^- + i_{M-S}^- + i_{D-S}^+ + i_{S-D}^-) \qquad (1).$$

Current $i_{s+}$ on the sense electrode 45 side is expressed by

$$i_S^+ = (i_{S-D}^+{}^- + i_{M-S}^+ + i_{D-S}^+{}^+ + i_{S-D}^+{}^-) \qquad (2).$$

Currents $i_{s-}$, $i_{s+}$ expressed by equations (1) and (2) are fed as currents d, e into current amplifiers 9, 10 as shown in Fig. 1, converted to voltage outputs, and fed into differential amplifier 11. An output from differential amplifier 11 is supplied to phase shifter 12, and phase shifter 12 shifts the phase of the output by 90°. Synchronous detector 19 then detects an output from phase shifter 12 via a monitor signal at point a.

Finally, a signal from synchronous detector 19 is fed into a low pass filter 20, regulated in gain or offset by digital regulating circuit 15, and then outputted from output terminal 21.

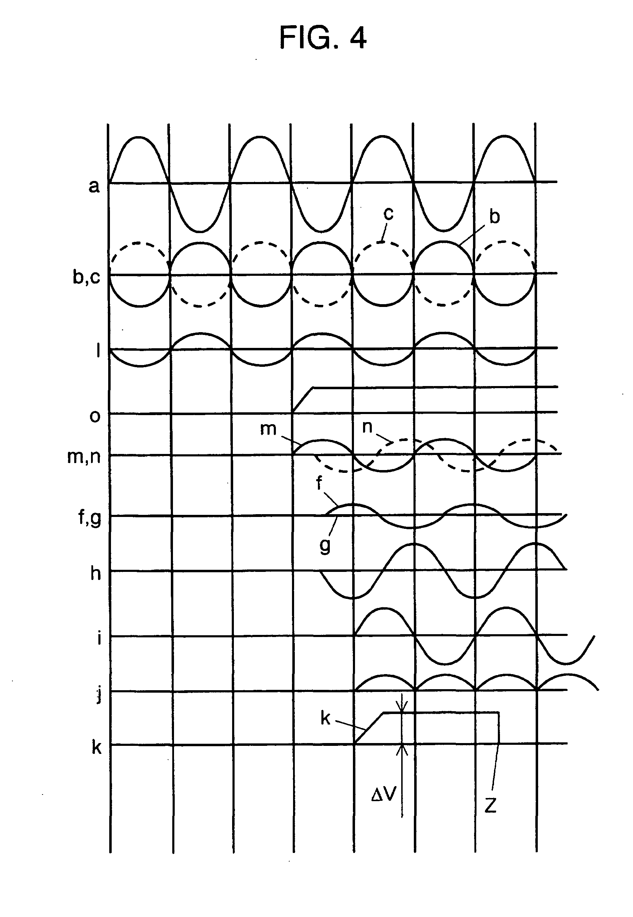

Fig. 4 shows operating waveform charts of elements in the angular velocity sensor shown in Fig. 1. In Fig. 4, the signal waveform at point a indicates a monitor signal provided by monitoring an oscillation level of tuning-fork-type quartz oscillator 1 in a steady state. The signal waveforms at points b, c indicate driving signals having mutually reverse phase for driving quartz oscillator 1. The monitor signal is attenuated to the signal waveform shown at point 1 by attenuator 22, and then the signal waveform shown at point m is supplied to capacitor 14 as the injector via switch 24. Switch 24 is turned on or off in response to an external diagnosis request signal (signal waveform shown at point o) supplied from control terminal 23.

The signal supplied to capacitor 14 generates a displacement current (signal waveform shown at point n) as a diagnosis signal having a phase shifted by 90° from the monitor signal. The displacement current is fed into current amplifier 9 and converted to voltage, and the converted signal (signal waveform shown at point f) is outputted.

Then, respective outputs (signal waveforms shown at points f, g) of current amplifiers 9, 10 are fed into differential amplifier 11, and an output (signal waveform shown at point h) is supplied from differential amplifier 11. The output from differential amplifier 11 is fed into phase shifter 12, and shifted by 90° in phase by phase shifter 12 to a signal waveform (signal waveform shown at point i) substantially having the same phase as that of the monitor signal (signal waveform shown at point a) or the opposite phase to that of the monitor signal. The output signal waveform (signal waveform shown at point i) from phase shifter 12 is detected via the monitor signal (signal waveform shown at point a) by synchronous detector 19.

Finally, a signal (signal waveform shown at point j) from synchronous detector 19 is fed into a low pass filter 20, regulated in gain or offset by digital regulating circuit 15, and then outputted from output terminal 21 (signal waveform shown at point k). The signal shown at point k corresponds to direct current (DC) fluctuation $\Delta V$ generated by self-diagnosis triggered by the external diagnosis request signal (signal waveform shown at point o). When the level of DC fluctuation $\Delta V$ is set at a predetermined DC fluctuation value by attenuator 22, for example, the predetermined DC fluctuation does not occur even when the external diagnosis request signal (signal waveform shown at point o) is added at a disconnection time shown at point z of Fig. 1. Without the level setting, the predetermined DC fluctuation occurs. When the predetermined DC fluctuation value is monitored as a threshold, abnormality of the angular velocity sensor can be determined.

The capacitor is employed as the injector in the present embodiment; however, a resistor may be employed.

(Exemplary Embodiment 2)

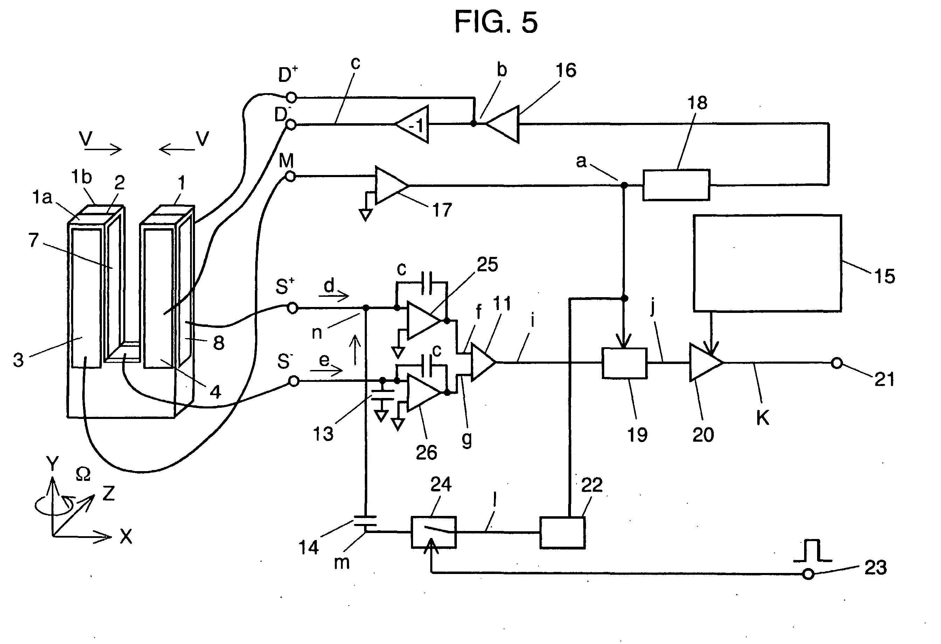

Fig. 5 is a block diagram of a circuit of an angular velocity sensor in accordance with a second exemplary embodiment of the present invention. In Fig. 5, elements similar to those in Fig. 1 are denoted with the same reference numbers, the detailed descriptions of those elements are omitted, and only the other elements are described in detail.

The circuit of the second exemplary embodiment has charge amplifiers 25, 26 having 90° or 270° of phase characteristic of input current - output voltage. This configuration allows omission of phase shifter 12 shown in Fig. 1.

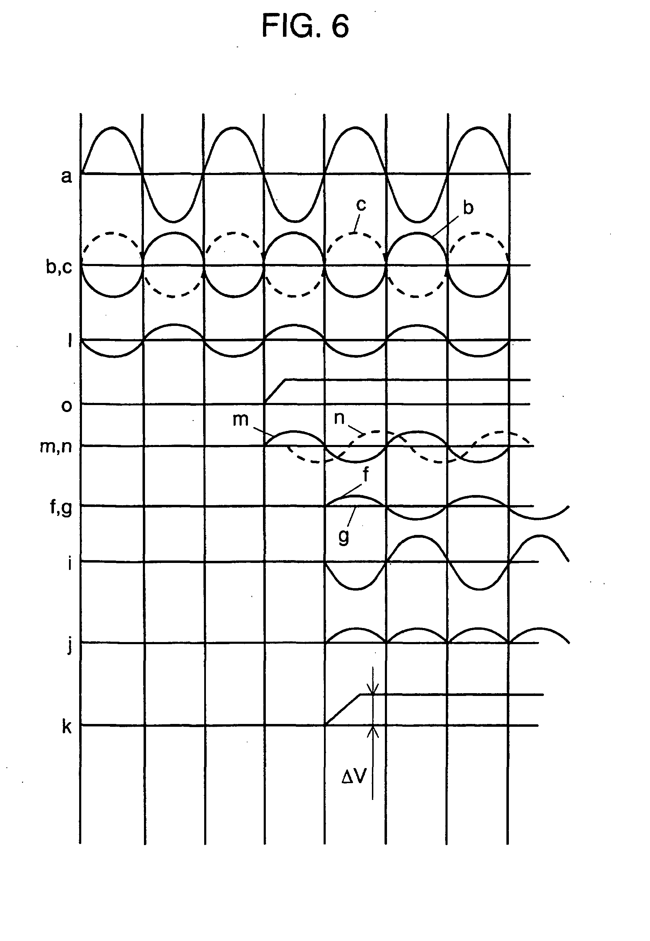

Fig. 6 shows operating waveform charts of elements in the angular velocity sensor shown in Fig. 5. Signal waveforms of the elements shown in Fig. 6 are essentially the same as those shown in Fig. 4, except for the following points. The phase of the signal waveform shown at point f is shifted by 90°, and the phase of the signal waveform shown at point i is shifted by 180° (reversed).

(Exemplary Embodiment 3)

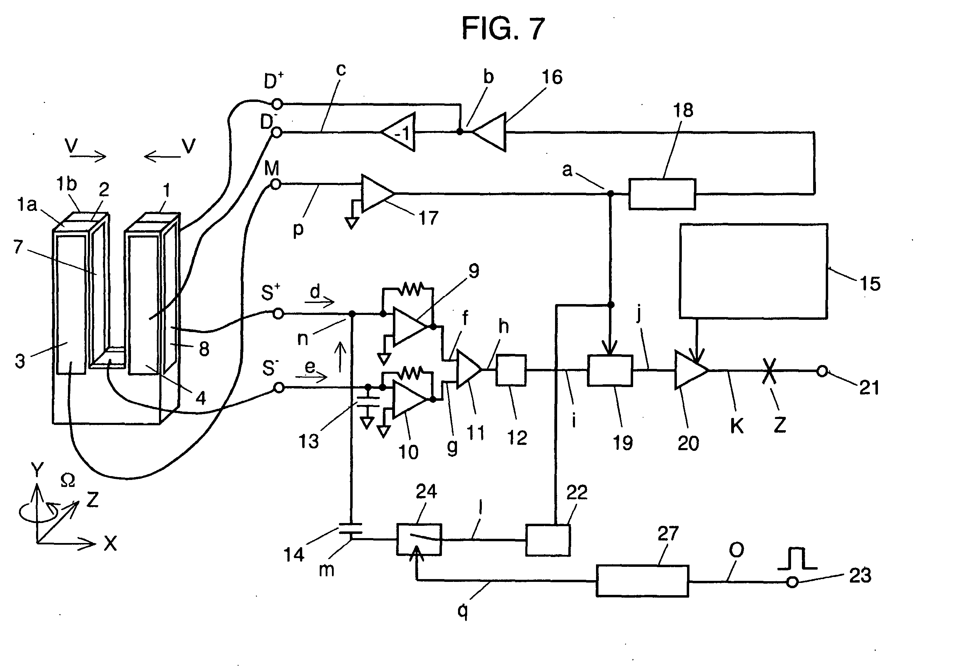

Fig. 7 is a block diagram of a circuit of an angular velocity sensor in accordance with a third exemplary embodiment of the present invention. In Fig. 7, elements similar to those in Fig. 1 are denoted with the same reference numbers, the detailed descriptions of those elements are omitted, and only the other elements are described in detail.

In Fig. 7, the angular velocity sensor has timer circuit. 27 triggered by an external diagnosis request signal supplied from control terminal 23. Timer circuit 27 allows realization of various functions of temporally delaying, disconnecting, or extending the external diagnosis request signal supplied from control terminal 23.

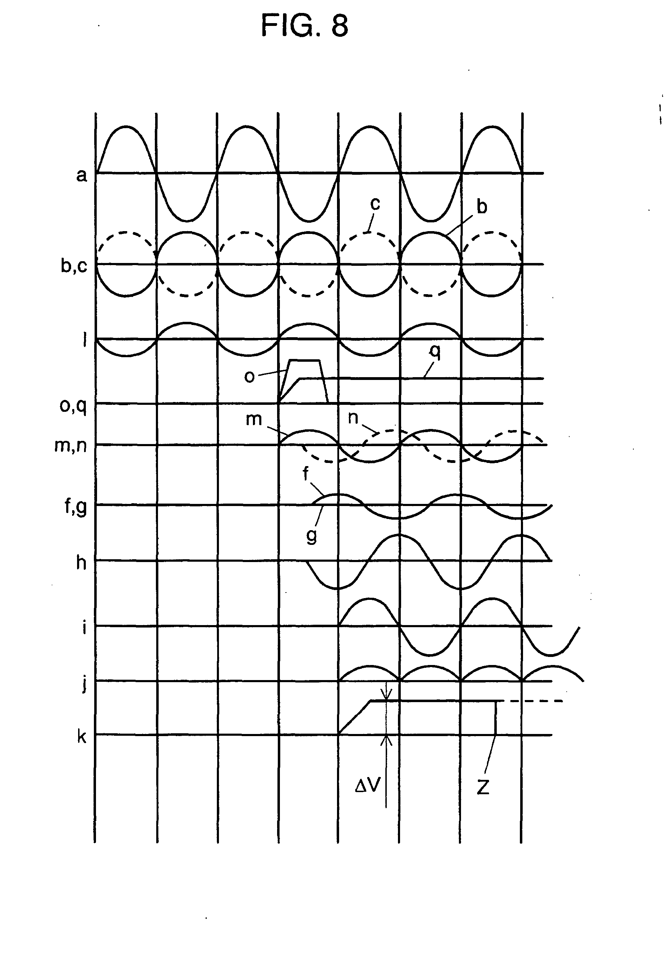

Fig. 8 shows operating waveform charts of elements in the angular velocity sensor shown in Fig. 7. Signal waveforms of the elements shown in Fig. 8 are essentially the same as those shown in Fig. 4, except for the following points. Pulse width of the signal waveform shown at point o is shortened, and an output (signal waveform shown at point q) from timer circuit 27 is newly added. The signal (signal waveform shown at point q) capable of keeping switch 24 in the on state for a long time is obtained from the external diagnosis request signal having short pulse width in the signal waveform shown at point o. Therefore, design freedom of an interface of a controller connected to the angular velocity sensor can be improved.

(Exemplary Embodiment 4)

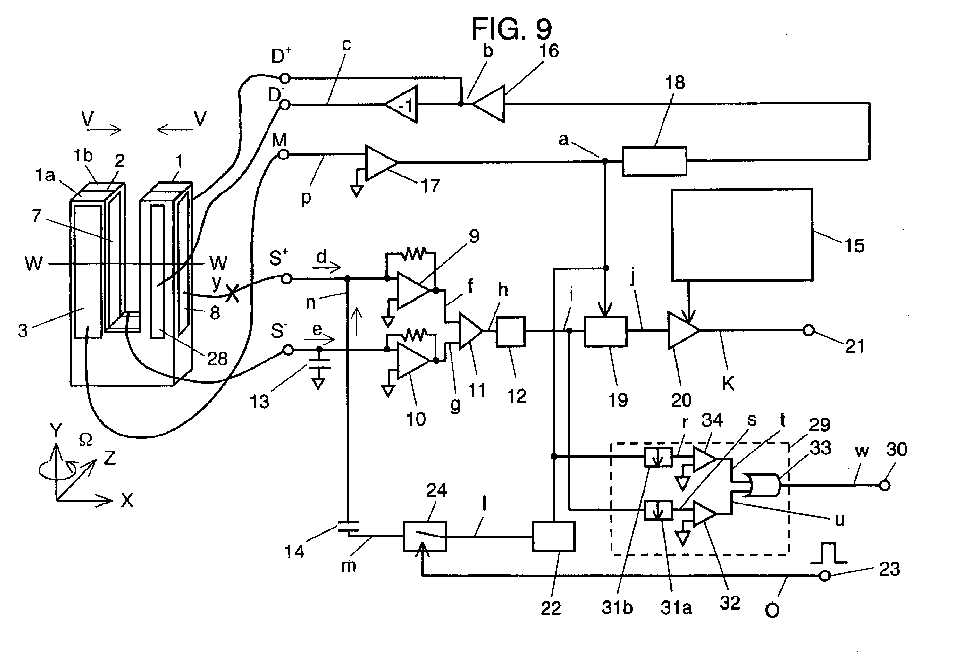

Fig. 9 is a block diagram of a circuit of an angular velocity sensor in accordance with a fourth exemplary embodiment of the present invention. In Fig. 9, elements similar to those in Fig. 1 are denoted with the same reference numbers, the detailed descriptions of those elements are omitted, and only the other elements are described in detail.

In Fig. 9, drive electrode 28 has a shorter width than that of drive electrode 4 of Fig. 1. OR circuit block 29 always monitors levels of currents d, e outputted from respective sense electrodes 8, 7 even when control terminal 23 supplies no external diagnosis request signal, and outputs a self-diagnosis signal from a diagnosis signal output terminal 30 under fault conditions.

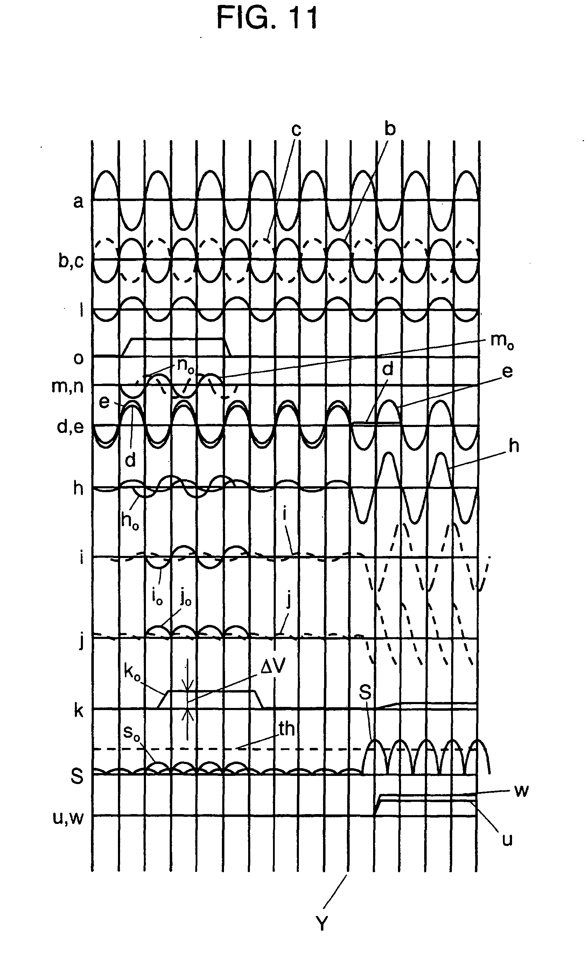

Fig. 11 shows operating waveform charts of elements in the angular velocity sensor shown in Fig. 9.

Signal waveforms of the elements shown in Fig. 11 are essentially the same as those shown in Fig. 4, except for the following points. Signal waveforms of the currents d, e outputted from respective sense electrodes 8, 7, the signal waveform at point s, and signal waveforms at points u, w are newly added.

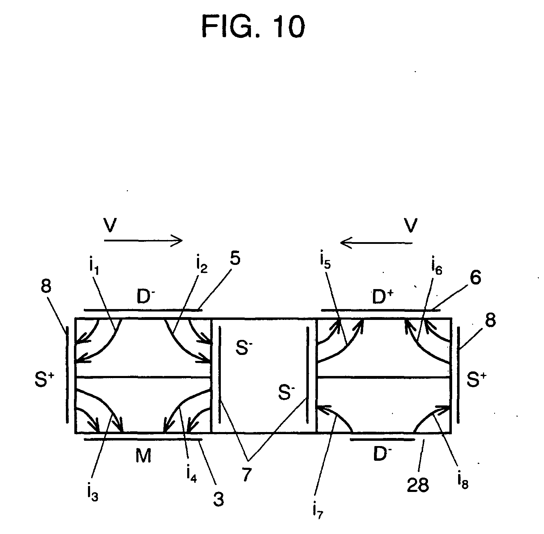

As shown in Fig. 9, tuning-fork-type quartz oscillator 1 oscillates like a tuning fork at a velocity V in the X-axis direction. Fig. 10 shows current occurring between the electrodes. Therefore, current $i_{s-}$ on the sense electrode 7 side is expressed by

$$i_s^- = i_2 - i_4 - i_5 + i_7 \qquad (3).$$

Current $i_{s+}$ on the sense electrode 8 side is expressed by

$$i_s^+ = i_1 - i_3 - i_6 + i_8 \qquad (4).$$

In equations (3), (4), strengths of $i_1$ to $i_4$ are substantially equal, so that $i_2$ and $i_4$ cancel each other and $i_1$ and is cancel each other. The width of drive electrode 28 differs from that of drive electrode 6, so that $i_5$ (=$i_6$) ≠ $i_7$ (=$i_8$). Current $i_{s-}$ and current $i_{s+}$ are finally expressed by

$$i_s^- = - i_5 + i_7 \qquad (5).$$

and

$$i_s^+ = - i_6 + i_8 \qquad (6),$$

respectively. Therefore, an output from differential amplifier 11 under normal conditions is expressed by

$$v = V (i_s^+ - i_s^-) = 0 \qquad (7).$$

However, when a disconnection (abnormality other than the disconnection is considered) occurs with timing Y at point y in Fig. 11, the signal waveform of current d becomes zero and only the signal waveform of current e remains. Therefore, equation (7) does not become zero, and the output from differential amplifier 11 comes into a non-equilibrium state (signal waveform at point h) as shown in

$$v = V( - i_s^-) = V (i_5 - i_7) \neq 0 \qquad (8).$$

When the signal waveform shown at point s formed by rectifying voltage v shown in equation (8) with rectifier 31a is controlled with reference to a threshold (shown in Fig. 11) by comparator 32 in OR circuit block 29, the signal waveform at point s exceeds threshold th and hence a "high" signal (signal waveform shown at point u) is outputted from comparator 32. Therefore, even when the external diagnosis request signal (signal waveform shown at point o) is not sent from control terminal 23, OR circuit 33 in OR circuit block 29 outputs a "high" signal (signal waveform shown at point w), and diagnosis signal output terminal 30 can instantly and always detect a failure such as disconnection. The signal at point r (signal provided after the signal at point a is rectified by rectifier 31b) exceeds a threshold set by comparator 34 under normal conditions, so that the signal at point t is set at a "low" signal. Therefore, when a monitor signal at point a is normal, an output (a signal from diagnosis signal output terminal 30) of OR circuit 33 becomes "low". When abnormality occurs in the monitor signal at point a, the signal at point r falls below the threshold set by comparator 34, and the signal at point t becomes a "high" signal, however, the output from OR circuit 33 (signal from diagnosis signal output terminal 30) becomes "high" to allow detection of the failure. By providing such OR circuit block 29, the angular velocity sensor can respond to both abnormality on the driving side and abnormality on the detection side of an angular velocity signal.

In the configuration discussed above, a dedicated means such as a dedicated electrode for pseudo-drive need not be disposed on the tuning-fork-type quartz oscillator. The configuration is therefore advantageous for electrode designing used for improving driving efficiency when the tuning-fork-type quartz oscillator is downsized, and also allows realization of a sensor having high failure detecting performance.

In Fig. 11, the waveforms of elements of the circuit formed when an external diagnosis request signal (waveform shown at point o) is inputted are denoted by point names having subscript o, for reference. These waveforms are essentially the same as those of Fig. 4.

(Exemplary Embodiment 5)

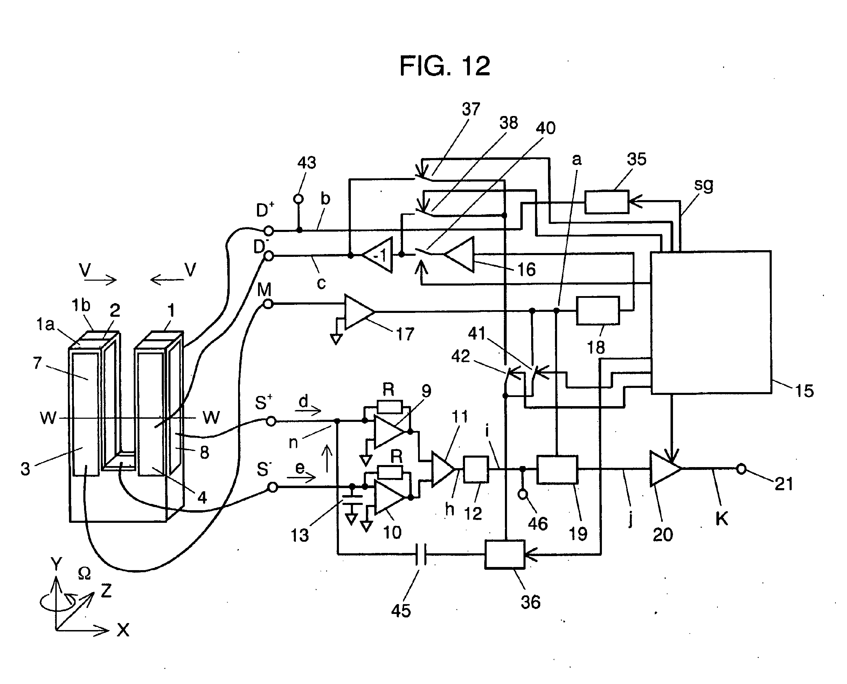

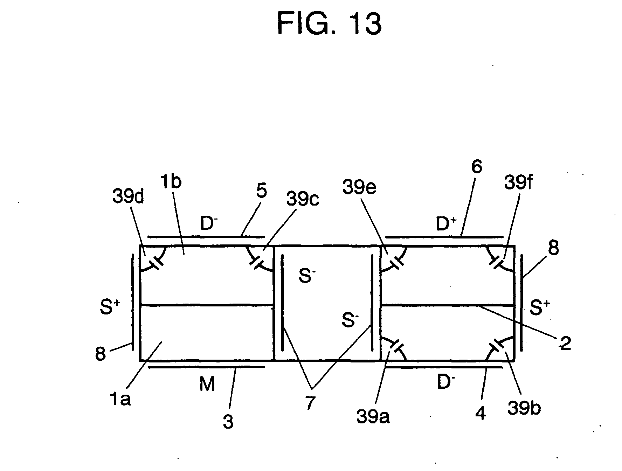

Fig. 12 is a block diagram of a circuit of an angular velocity sensor in accordance with a fifth exemplary embodiment of the present invention. Fig. 13 shows coupling capacitance between electrodes in the cross section taken along the line W - W of Fig. 12 of tuning-fork-type quartz oscillator 1 in accordance with the fifth exemplary embodiment. In Fig. 12 and Fig. 13, elements similar to those in Fig. 1 and Fig. 2 are denoted with the same reference numbers, the detailed descriptions of those elements are omitted, and only the other elements are described in detail.

The coupling capacitance shown in Fig. 13 can modulate an original output signal of tuning-fork-type quartz oscillator 1 and generate an undesired offset voltage in an angular velocity signal. The present embodiment relates to a circuit for performing regulation for preventing an effect of the coupling capacitance.

In Fig. 12 and Fig. 13, signal generator 35 generates a signal for regulation. For improving regulating accuracy, frequency of the signal generated by signal generator 35 is set at a frequency different from an oscillation mode frequency so as to prevent occurrence of oscillation of tuning-fork-type quartz oscillator 1. A signal from signal generator 35 is supplied as a positive voltage for pseudo-drive to positive drive electrode 6 through a terminal. While, a signal reversed by driver circuit 16 is generated and a negative voltage for pseudo-drive is supplied to negative drive electrodes 4, 5. The "pseudo-drive" means supply of a test signal for regulation without oscillating the sensor. Switches 37, 38 are used for selecting polarity of a driving signal supplied to regulator 36 in response to a switching signal from digital regulating circuit 15. Switches 37, 38 change voltage polarity for pseudo-drive added to drive electrodes 4, 5, 6 for correction in response to the polarity of a coupling signal. The coupling signal is caused by coupling capacitances 39a, 39b, 39c, 39d, 39e, 39f between drive electrodes 4, 5, 6 and sense electrodes 7, 8 that are detected from tuning-fork-type quartz oscillator 1. Switch 40 is used for opening a self-excited loop during regulation and stopping the driving of tuning-fork-type quartz oscillator 1. The circuit has switches 41, 42 for canceling the coupling signal caused by coupling capacitances 39a, 39b, 39c, 39d, 39e, 39f with a signal supplied to regulator 36. Switch 42 is closed in canceling the coupling signal.

When coupling capacitances 39a, 39b, 39c, 39d, 39e, 39f are small and can be neglected, switch 41 instead of switch 42 is closed to select a stable monitor signal (signal at point a), thereby allowing regulation of an initial value of the undesired signal caused by coupling capacitances 39a, 39b, 39c, 39d, 39e, 39f generated from tuning-fork-type quartz oscillator 1.

Terminal 43 is an extracting section from which a pseudo-driving signal sent to tuning-fork-type quartz oscillator 1 is monitored in an regulating process. Thanks to terminal 43, a probe or the like need not be placed on the soldering part during the regulation, and damage of a soldering part by the probe is prevented. Additionally, a driving signal superposed on the probe itself can be prevented from coupling as a new signal source to sense electrodes 7, 8 of quartz oscillator 1. Gain or offset of low pass filter 20 is regulated via a signal from digital regulating circuit 15, thereby regulating an output of the angular velocity sensor obtained from output terminal 21 and digitally selecting a signal for regulation. The signal for regulation is used for storing an regulating amount of regulator 36 and controlling switches 37, 38, 41, 42.

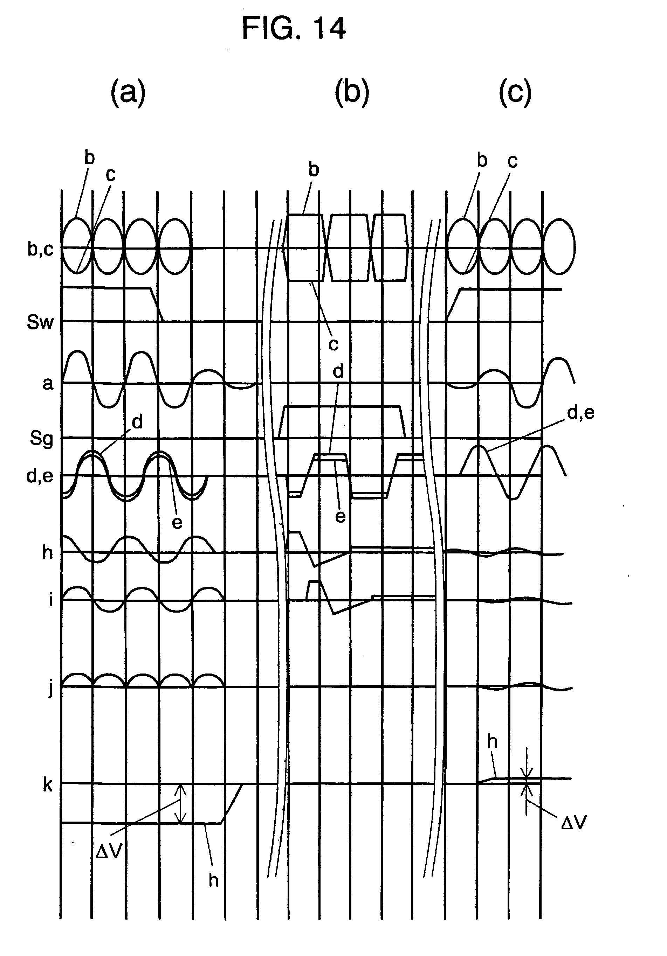

Fig. 14 (a), Fig. 14 (b), and Fig. 14 (c) show operating waveform charts of elements of the angular velocity sensor of Fig. 12 before, during, and after regulation, respectively. Signal waveforms of the elements shown in Fig. 14 (a), Fig. 14 (b), and Fig. 14 (c) are essentially the same as those of Fig. 4, except for the following points. The operating signal waveforms of the elements change depending on an opening/closing signal of switch 40 and a signal of signal generator 35. The opening/closing signal is denoted by sw and has a high level in the closed state. The signal of signal generator 35 is denoted by sg and has a high level in the operating state.

As shown in Fig. 14 (a), coupled current signals d, e are generated by coupling capacitances 39a, 39b, 39c, 39d, 39e, 39f caused by the driving voltage shown in Fig. 13.

Values C of coupling capacitances 39a, 39b, 39c, 39d, 39e, 39f are apt to have coupling capacitance difference $\Delta C$ due to dispersion such as electrode shape difference, facing distance difference, displacement, or shape of tuning-fork-type quartz oscillator 1. A signal (signal waveform shown at point h) having coupling current difference $\omega \cdot \Delta C \cdot Vd$ is therefore generated from current signals d, e decreased and remained by differential amplifier 11, and is shifted to a signal having the same phase as that of the monitor signal (signal waveform shown at point a) by ninety-degree phase shifter 12. Here, $\omega$ is a drive voltage frequency, and Vd is a drive voltage level. The shifted signal is fed into synchronous detector 19, and finally outputted as offset $\Delta V$ from output terminal 21. The driving signal voltage causing $\Delta V$ is automatically determined in a drive-closed loop including tuning-fork-type quartz oscillator 1, so that a piezoelectric characteristic of material forming quartz oscillator 1 is apt to be affected by temperature and exponentially increases with increase in temperature. When a tuning-fork-type quartz oscillator having a non-negligible level of coupling is employed, the sensor has a nonlinear offset change characteristic on a high temperature side, a configuration of a correcting means or the like is complicated, and a change in temperature directly causes offset change of the sensor. Therefore, reliability of the sensor is low. For preventing the state, a state where quartz oscillator 1 is not actively oscillated is formed, and regulator 36 is disposed. Regulator 36 reduces difference between signals supplied from quartz oscillator 1, by applying pseudo drive voltages b, c to quartz oscillator 1 with signal generator 35. Thus, accuracy of the sensor can be increased. Here, the signals supplied from quartz oscillator 1 are current signals d, e caused by coupling capacitances 39a, 39b, 39c, 39d, 39e, 39f occurring at points h and i. Frequency of the pseudo drive voltages applied from signal generator 35 can be set at a value other than the natural frequency of quartz oscillator 1.

When signal generator 35 is put into an operating state as shown in Fig. 14 (b), for example, trapezoidal pseudo drive voltages b, c occur and $\Delta V$ is decreased using a ladder network resistor as regulator 36 and capacitor 45 as an injector for correction. This process will be described hereinafter. Assuming capacity of capacitor 45 is C and constant of the ladder network resistor regulated for decreasing $\Delta V$ is $\alpha$, a correction term is expressed by

$$C \cdot \alpha \cdot Vd \qquad (9),$$

Therefore, when coupling capacitance difference $\Delta C$ and capacity C of capacitor 45 are stable in temperature, the signal waveforms at points h and i shown in 14 (b) approach zero by regulating $\alpha$ so as to set the equation (10) at zero,

$$\Delta C \cdot Vd - C \cdot \alpha \cdot Vd = (\Delta C - C \cdot \alpha) \cdot Vd \qquad (10).$$

After the completion of the regulation, as shown in 14 (c), the signal waveforms at points h, i, and j approach zero without limit, and finally output terminal 21 outputs offset amount $\Delta V$ lightly affected by drive voltage Vd.

Capacitor 45 is formed together with the other circuit units in a semiconductor integrated circuit, thereby requiring no soldering part for connection and improving reliability.

Actually, $\alpha$ is regulated in an regulating stage while an oscilloscope or the like monitors signal level at terminal 46 to monitor pseudo drive voltage at terminal 43 and the voltage generated by current signals d, e. Digital signals are sequentially transmitted to the ladder network resistor so that voltage difference generated by current signals d, e becomes zero, and data of the digital signal after the zero regulation is stored in a memory such as a ROM. Thus, a highly accurate sensor having a suppressed coupling capacitance in a normal operation can be provided.

In the present embodiment, an example is described where offset amount $\Delta V$ from output terminal 21 is closed to zero without limit by regulation of $\alpha$. However, offset amount $\Delta V$ from output terminal 21 may be actively increased by regulation of $\alpha$.

When the ladder network resistor and capacitor 45 have an element having a temperature-sensitive characteristic, temperature compensation can be also regulated.

Quartz is used as the tuning-fork-type quartz oscillator in the present embodiment; however, an oscillator formed of piezoelectric ceramic, silicon, a combination of silicon and piezoelectric film may be employed. The shape of the oscillator is not limited to the tuning fork shape.

In first to fifth embodiments, the configuration formed of a current amplifier, a differential amplifier, a phase shifter, and a synchronous detector is employed; however, the oscillator of the present invention is not limited to the configuration. The oscillator is simply required to have a synchronous demodulator for synchronously detecting outputs at least from the differential amplifier to output an angular velocity signal.

(Exemplary Embodiment 6)

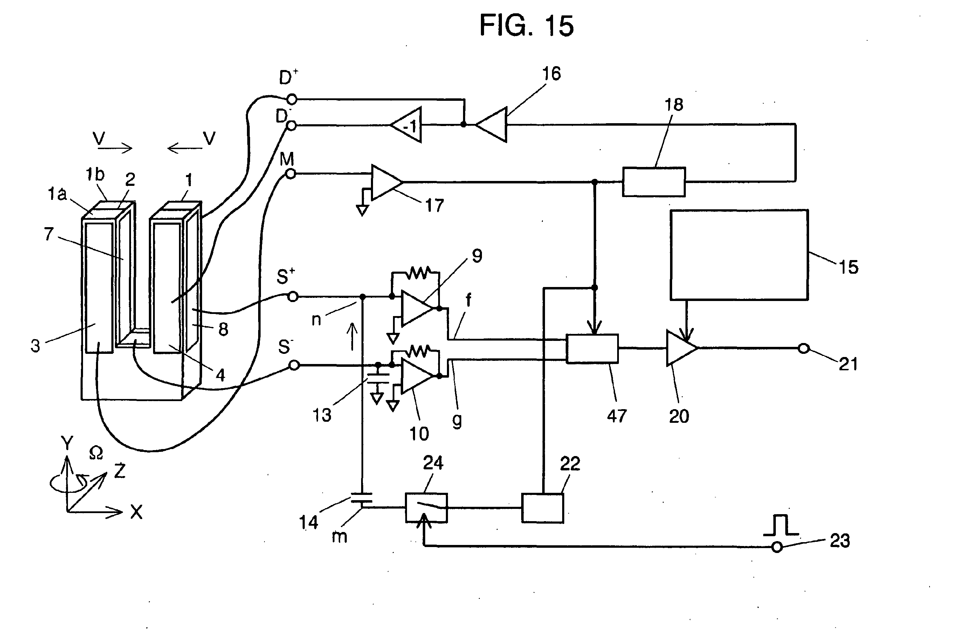

Fig. 15 is a block diagram of a circuit of an angular velocity sensor in accordance with a sixth exemplary embodiment of the present invention. In Fig. 15, elements similar to those in Fig. 1 are denoted with the same reference numbers, the detailed descriptions of those elements are omitted, and only the other elements are described in detail.

In Fig. 15, synchronous demodulator 47 shifts phase of a differential signal between output signals of current amplifiers 9, 10 by 90°, samples and holds the signals after the 90° phase shift, and synchronously detects the sampled and held signals. Synchronous demodulator 47 has a sample and hold function, so that excessive undesired signals generated from tuning-fork-type quartz oscillator 1 can be prevented from causing saturation of the circuit. In the present embodiment, the synchronous demodulator shifts the phase of the differential signal between the output signals of current amplifiers 9, 10 by 90°, samples and holds the signals after the phase shift, and synchronously detects the sampled and held signals. However, the present invention is not limited to this, but is required simply to have a function of achieving the same purpose.

## INDUSTRIAL APPLICABILITY

An angular velocity sensor of the present invention includes the following elements:

> a sensor element having an oscillating section and a detecting section for detecting an angular velocity;
> a driving means having a driver circuit for supplying a driving signal to the oscillating section of the sensor element, and a monitor circuit for receiving a monitor signal from the sensor element;
> a detecting means having the following components:
>
>> one pair of a pair of charge amplifiers and a pair of current amplifiers for receiving an output from the detecting section of the sensor element;
>> a differential amplifier for amplifying output difference between one pair of the pair of charge amplifiers and the pair of current amplifiers; and
>> a synchronous demodulator for outputting an angular velocity signal by detecting an output from the differential amplifier synchronously with the driving signal from the driving means; and
>
> a self-diagnosis means for outputting a diagnosis signal used for detecting an abnormality by adding a signal synchronous with the driving signal of the driving means to a stage before the synchronous demodulator.

This configuration allows the detection from the outside of a state in which a part of the sensor damages to disable a normal detection, and provide an angular velocity sensor having further improved in-service reliability.

## Claims

1. An angular velocity sensor comprising:

> a sensor element having an oscillating section and a detecting section for detecting an angular velocity;
> driving means having a driver circuit for supplying a driving signal to the oscillating section of said sensor element, and a monitor circuit for receiving a monitor signal from said sensor element;
> detecting means including:
>
>> one pair of a pair of charge amplifiers and a pair of current amplifiers for receiving an output from the detecting section of said sensor element;
>> a differential amplifier for amplifying output difference between one pair of the pair of charge amplifiers and the pair of current amplifiers; and
>> a synchronous demodulator for outputting an angular velocity signal by detecting an output from the differential amplifier synchronously with the driving signal from said driving means; and
>
> self-diagnosis means for outputting a diagnosis signal used for detecting an abnormality by adding a signal synchronous with the driving signal of said driving means to a stage before the synchronous demodulator.

2. An angular velocity sensor comprising:

> a sensor element having an oscillating section and a detecting section for detecting an angular velocity;
> driving means having a driver circuit for supplying a driving signal to the oscillating section of said sensor element, and a monitor circuit for receiving a monitor signal from said sensor element;
> detecting means including:
>
>> one pair of a pair of charge amplifiers and a pair of current amplifiers for receiving an output from the detecting section of said sensor element; and
>> a synchronous demodulator for sampling and holding an output from one pair of the pair of charge amplifiers and the pair of current amplifiers synchronously with the driving signal from said driving means, and for outputting an angular velocity signal; and

self-diagnosis means for outputting a diagnosis signal used for detecting an abnormality by adding a signal synchronous with the driving signal of said driving means to a stage before the synchronous demodulator.

3. An angular velocity sensor comprising:

a sensor element having an oscillating section and a detecting section for detecting an angular velocity;
driving means having a driver circuit for supplying a driving signal to the driving section of said sensor element, and a monitor circuit for receiving a monitor signal from said sensor element;
detecting means including:

a pair of current amplifiers for receiving an output from the detecting section of said sensor element;
a differential amplifier for detecting output difference between the pair of current amplifiers;
a phase shifter for shifting by 90° a phase of an output from the differential amplifier; and
a synchronous detector for synchronously detecting an output from the phase shifter in response to the driving signal from said driving means and for outputting an angular velocity signal; and

self-diagnosis means for outputting a diagnosis signal used for detecting an abnormality by adding a signal synchronous with the driving signal of said driving means to a stage before the synchronous detector.

4. An angular velocity sensor according to claim 1, wherein the signal for self-diagnosis synchronous with the driving signal is sent to an input terminal of one pair of the pair of charge amplifiers and the pair of current amplifiers.

5. An angular velocity sensor according to claim 1, wherein the signal for self-diagnosis synchronous with the driving signal is an output signal of a monitor circuit.

6. An angular velocity sensor according to claim 1, wherein said self-diagnosis means comprises:

an attenuator for attenuating the signal synchronous with the driving signal; and

an injector for adding a signal from the attenuator to a stage before the synchronous demodulator.

7. An angular velocity sensor according to claim 6, wherein the injector is a capacitor.

8. An angular velocity sensor according to claim 6, wherein the injector is a resistor.

9. An angular velocity sensor according to claim 6, wherein the attenuator is a ladder network resistor.

10. An angular velocity sensor according to claim 1, wherein said self-diagnosis means has switching means for switching between an operating state and a non-operating state.

11. An angular velocity sensor according to claim 10, wherein the switching means is a switch for connecting or disconnecting the signal synchronous with the driving signal in response to an operation from the outside, the signal synchronous with the driving signal being added to the stage before the synchronous demodulator.

12. An angular velocity sensor according to claim 10, wherein the switching means is a switch having a timer circuit for connecting or disconnecting the signal synchronous with the driving signal for a certain time in response to an operation from the outside, the signal synchronous with the driving signal being added to the stage before the synchronous demodulator.

13. An angular velocity sensor according to claim 2, wherein said self-diagnosis means has determining means for detecting an output level of said detecting means during a non-operation and for always determining abnormality of said sensor element.

14. An angular velocity sensor according to claim 13, wherein said self-diagnosis means comprises:

an attenuator for attenuating the signal synchronous with the driving signal;
an injector for adding a signal from the attenuator to a stage before the synchronous demodulator; and
switching means disposed between the attenuator and the injector.

15. An angular velocity sensor according to claim 14, wherein the switching means is a switch for connecting or disconnecting the signal synchronous with the driving signal in response to an operation from the outside, the signal synchronous with the driving signal being added to the stage before the synchronous demodulator.

16. An angular velocity sensor according to claim 14, wherein the switching means is a switch having a timer circuit for connecting or disconnecting the signal synchronous with the driving signal for a certain time in response to an operation from the outside, the signal synchronous with the driving signal being added to the stage before the synchronous demodulator.

17. An angular velocity sensor according to claim 1, wherein said sensor element is an oscillator comprising one of quartz, silicon of which surface has piezoelectric film, and piezoelectric ceramic.

18. An angular velocity sensor comprising:

a sensor element having an oscillating section and a detecting section for detecting an angular velocity;
driving means having a driver circuit for supplying a driving signal to the oscillating section of said sensor element, and a monitor circuit for receiving a monitor signal from said sensor element;
detecting means including:

one pair of a pair of charge amplifiers and a pair of current amplifiers for receiving an output from the detecting section of said sensor element;
a differential amplifier for amplifying output difference between one pair of the pair of charge amplifiers and the pair of current amplifiers; and
a synchronous demodulator for outputting an angular velocity signal by detecting an output from the differential amplifier synchronously with the driving signal from said driving means; and

regulating means for regulating a signal from the detecting section by adding a signal synchronous with the driving signal of said driving means to a stage before the synchronous demodulator,

wherein said regulating means comprises a regulator for varying the signal synchronous with the driving signal and an injector for adding a signal from the regulator to a stage before the synchronous demodulator.

19. An angular velocity sensor according to claim 18, wherein the injector is a capacitor.

20. An angular velocity sensor according to claim 18, wherein the injector is a resistor.

21. An angular velocity sensor according to claim 18, wherein the regulator is a ladder network resistor adjustable digitally.

22. An angular velocity sensor according to claim 18, wherein the regulator is a variable resistor.

23. An angular velocity sensor according to claim 18, wherein one of the regulator and the injector has a temperature-sensitive element for temperature compensation of the signal synchronous with the driving signal.

24. An angular velocity sensor according to claim 18, further comprising correcting means for electrically correcting an electrostatic coupling signal on a circuit unit using a pseudo-driving signal, the electrostatic coupling signal occurring between the oscillating section and the detecting section.

25. An angular velocity sensor according to claim 18, further comprising a terminal for monitoring the driving signal and the output signal from the detecting section of said sensor element.

26. An angular velocity sensor according to claim 24, further comprising a switch for disconnecting the driver circuit of said sensor element in correcting the electrostatic coupling signal.

27. An angular velocity sensor comprising:

a sensor element having an oscillating section and a detecting section for detecting an angular velocity;
a driver circuit for supplying a driving signal to the oscillating section of said sensor element;
a monitor circuit for receiving a monitor signal from said sensor element;
driving means for stably self-excitedly oscillating the oscillating section of said sensor element;
controlling means for stopping self-excited oscillation;
a signal generator for sending a signal for regulation to the oscillating section of said sensor element in operating said controlling means;
one pair of a pair of charge amplifiers and a pair of current amplifiers for receiving an output from the detecting section;
detecting means including a synchronous demodulator for performing demodulation simultaneously with the driving signal from said driving means, and for outputting an angular velocity signal; and
regulating means for regulating an electrostatic coupling signal occurring between the oscillating section and the detecting section by adding the driving signal from said driving means to a stage before the synchronous demodulator.

28. An angular velocity sensor according to claim 27, wherein said regulating means comprises:

an attenuator for regulating a signal synchronous with the driving signal; and
a capacitor for adding a signal from the attenuator to a stage before the synchronous demodulator.

29. An angular velocity sensor according to claim 27, wherein said controlling means is a switch disposed in a loop of said driving means.

30. An angular velocity sensor according to claim 27, wherein frequency of the signal for regulation sent from said signal generator differs from an oscillation mode frequency peculiar to said sensor element.

31. An angular velocity sensor according to claim 28, wherein the capacitor is formed on a semiconductor integrated circuit constituting said driving means and said detecting means.

32. An angular velocity sensor according to claim 28, wherein the attenuator is adjustable in level.

33. An angular velocity sensor according to claim 28, wherein the attenuator is adjustable in gain.

34. An angular velocity sensor according to claim 28, wherein the attenuator is a phase shifter adjustable in phase.

35. An angular velocity sensor according to claim 28, wherein the attenuator has digital regulating means capable of performing stepwise regulation based on preset digital data.

36. An angular velocity sensor according to claim 6, further comprising balancing means in an input terminal for having a balance between input characteristics of one pair of the pair of charge amplifiers and the pair of current amplifiers, the input terminal being disposed in one amplifier of one pair of the pair of charge amplifiers and the pair of current amplifiers, the one amplifier being connected to no injector.

37. An angular velocity sensor according to claim 27, wherein said driver circuit comprises:

means for generating signals having mutually opposite phase as the driving signal of said sensor element; and
a switch for selecting one of the signals having opposite phase and for supplying the selected signal to said regulating means.

38. An angular velocity sensor according to claim 27, wherein a signal supplied to said regulating means is one of a driving signal and a monitor signal selected by a switch.

FIG. 1

EP 1 367 367 A1

# FIG. 2

# FIG. 3

# FIG. 4

# FIG. 5

EP 1 367 367 A1

# FIG. 6

# FIG. 7

EP 1 367 367 A1

# FIG. 8

FIG. 9

FIG. 10

# FIG. 11

FIG. 12

# FIG. 13

# FIG. 14

FIG. 15

# FIG. 16

# FIG. 17

## Reference Numerals

1 Tuning-fork-type quartz oscillator

1a, 1b Tuning-fork-type quartz oscillator pieces

2 Joint interface

3 Monitor electrode

4, 5, 6, 28 Drive electrodes

7, 8 Sense electrodes

9, 10, 17 Current amplifiers

11 Differential amplifier

12 Ninety-degree phase shifter

13 Capacitor for balance

14, 45 Capacitors

15 Digital regulating circuit

16 Driver circuit

18 AGC circuit

19 Synchronous detector

20 Low pass filter

21 Output terminal

22 Attenuator

23 Control terminal

24 Switch

25, 26 Charge amplifiers

27 Timer circuit

29 OR circuit block

30 Diagnosis signal output terminal

31a, 31b Rectifiers

32, 34 Comparator

33 OR circuit

35 Signal generator

36 Rectifier

37, 38, 40, 41, 42 Switches

39a, 39b, 39c, 39d, 39e, 39f Coupling capacitances

43, 46 Terminal

47 Synchronous demodulator

## INTERNATIONAL SEARCH REPORT

| International application No. |
| --- |
| PCT/JP02/02116 |

**A. CLASSIFICATION OF SUBJECT MATTER**
Int.Cl$^7$ G01C19/56, G01P9/04

According to International Patent Classification (IPC) or to both national classification and IPC

**B. FIELDS SEARCHED**

Minimum documentation searched (classification system followed by classification symbols)
Int.Cl$^7$ G01C19/00-19/72, G01P9/04

Documentation searched other than minimum documentation to the extent that such documents are included in the fields searched
Jitsuyo Shinan Koho          1922-1996    Toroku Jitsuyo Shinan Koho    1994-2002
Kokai Jitsuyo Shinan Koho    1971-2002    Jitsuyo Shinan Toroku Koho    1996-2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | EP 0773430 A1   (Matsushita Electric Industrial Co., Ltd.), 29 May, 1996 (29.05.96), | 1-3,5-11, 13-15,17-23, 25 |
| Y | Full text; all drawings | 4,12,16 |
| A | & JP 9-281138 A        & JP 8-327363 A & WO 96/38712 A1       & US 5939630 A1 & US 6089091 A1 | 36 |
| X | JP 9-105637 A   (Murata Mfg. Co., Ltd.), | 18-23,25 |
| Y | 22 April, 1997 (22.04.97), | 4 |
| A | Fig. 1 (Family: none) | 36 |
| X | JP 4-295716 A   (Matsushita Electric Industrial Co., Ltd.), | 18-23,25 |
| A | 20 October, 1992 (20.10.92), Fig. 1 (Family: none) | 7 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 May, 2002 (10.05.02) | 28 May, 2002 (28.05.02) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

**EP 1 367 367 A1**

## INTERNATIONAL SEARCH REPORT

| International application No. |
|---|
| PCT/JP02/02116 |

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 4-297874 A  (Matsushita Electric Industrial Co.,<br>Ltd.),<br>21 October, 1992 (21.10.92),<br>Fig. 1<br>(Family: none) | 18-23,25<br>8-9 |
| X<br>A | JP 10-73437 A  (Fujitsu Ltd.),<br>17 March, 1998 (17.03.98),<br>Claim 2<br>(Family: none) | 24<br>26,27-35,<br>37-38 |
| X<br>A | Microfilm of the specification and drawings annexed<br>to the request of Japanese Utility Model Application<br>No. 107208/1987 (Laid-open No. 15911/1989)<br>(NEC Home Electronics Ltd.),<br>26 January, 1989 (26.01.89),<br>Page 3, line 5; Fig. 1<br>(Family: none) | 24<br>26,27-35,<br>37-38 |
| Y | EP 462580 A1  (Japan Aviation Electronics Industry,<br>Ltd.),<br>27 December, 1991 (27.12.91),<br>Fig. 3<br>& JP 4-52511 A       & US 5108181 A<br>& CA 2044850 A       & DE 69104912 T | 12,16 |
| A | EP 1031814 A1  (Matsushita Electric Industrial Co.,<br>Ltd.),<br>09 September, 1999 (09.09.99),<br>Claim 2<br>& WO 00/16042 A1       & JP 2000-88578 A | 23 |

Form PCT/ISA/210 (continuation of second sheet) (July 1998)

30

## INTERNATIONAL SEARCH REPORT

| International application No. |
| --- |
| PCT/JP02/02116 |

**Box I   Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II   Observations where unity of invention is lacking (Continuation of item 2 of first sheet)**

This International Searching Authority found multiple inventions in this international application, as follows:

```
    The inventions of claims 1-3, 5-11, 13-15, 17-23, 25 are not novel.

    Claims 4, 36 are directed to a part of an angular velocity sensor self-
diagnosis circuit.
    Claims 12, 16 are directed to a timer used for an angular velocity sensor
self-diagnosis circuit.
    Claims 24; 26; 27-35; 37, 38 are directed to a technique of adjusting
capacitive coupling.
```

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐   The additional search fees were accompanied by the applicant's protest.

☒   No protest accompanied the payment of additional search fees.

Form PCT/ISA/210 (continuation of first sheet (1)) (July 1998)